(19)

Europäisches
Patentamt
European
Patent Office
Office européen
des brevets

(11) **EP 1 894 969 A1**

(12) **EUROPEAN PATENT APPLICATION**
published in accordance with Art. 153(4) EPC

(43) Date of publication:
**05.03.2008 Bulletin 2008/10**

(21) Application number: **06767034.9**

(22) Date of filing: **21.06.2006**

(51) Int Cl.:
**C08L 23/16** (2006.01)    **C08K 3/04** (2006.01)
**C08K 3/34** (2006.01)    **C08K 5/14** (2006.01)
**C08K 7/00** (2006.01)    **C09K 3/10** (2006.01)
**F16J 15/10** (2006.01)

(86) International application number:
**PCT/JP2006/312375**

(87) International publication number:
**WO 2006/137420 (28.12.2006 Gazette 2006/52)**

(84) Designated Contracting States:
**DE FR GB PT**

(30) Priority: **24.06.2005 JP 2005184344**

(71) Applicants:
• **NOK Corporation**
**Minato-ku**
**Tokyo 105-8585 (JP)**
• **EAGLE INDUSTRY Co., Ltd.**
**Tokyo 105-8587 (JP)**

(72) Inventors:
• **AMEMIYA, Takashi,**
**c/o NOK Corporation**
**Miyaki-gun,**
**Saga 849-0102 (JP)**
• **KOBAYASHI, Osamu,**
**c/o Eagle Industry Co., Ltd.**
**Tokyo 105-8587 (JP)**

(74) Representative: **HOFFMANN EITLE**
**Patent- und Rechtsanwälte**
**Arabellastrasse 4**
**81925 München (DE)**

(54) **EPDM COMPOSITION**

(57)    An EPDM composition, which comprises 100 parts by weight of EPDM having an ethylene content of 50-58wt.%, and a Mooney viscosity $ML_{1+4}$ (100°C) of 10-48, and 0.2-4.0 parts by weight of an organic peroxide as a cross-linking agent, has a distinguished blister resistance in a mixed state of chlorofluorocarbon gas/refrigerator oil, which has been a problem in practical use, and a distinguished moldability, as a rubber material for molding sealing materials for chlorofluorocarbon refrigerant including R134a. Sealing materials made from the EPDM composition by vulcanization-molding can provide EPDM-made sealing materials having less permeation leakage amount of chlorofluorocarbon refrigerant than that of hydrogenated NBR so far used as sealing materials in shaft sealing devices in compressors of automobile air conditioners.

EP 1 894 969 A1

**Description**

TECHNICAL FIELD

The present invention relates to an EPDM composition, and more particularly to an EPDM composition for use as a suitable molding material for sealing materials, etc. having a distinguished resistance to flon (chlorofluorocarbon) and refrigerator oil, and less permeation leakage amount of chlorofluorocarbon refrigerant.

BACKGROUND ART

Ethylene-propylene-based copolymer rubber has been regarded as most resistant to R134a (1,1,1,2-tetrafluoroethane) as an air conditioner refrigerant, but as less resistant for some of refrigerator oil and built-in oil. So hydrogenated NBR has been so far used as sealing materials for air conditioner refrigerants.

Non-Patent Literature 1 : Bulletin of Japan Rubber Society 64, 161 (1991)
Patent Literature 1 : JP-A-7-118447

However, demands for ethylene-propylene-based copolymer rubber have been now again increasing in place of the hydrogenated NBR so as to keep a good sealability when exposed to low-temperature vibrations, and consequently ethylene-propylene-based copolymer rubber materials having improved blister resistance to chlorofluorocarbon refrigerants and chlorofluorocarbon gas permeation resistance, that is, a blend rubber composition with NBR-based rubber, which contains at least 30wt.% of peroxide-crosslinkable ethylene-propylene-based copolymer rubber having a Mooney viscosity $ML_{1+4}$ (100°C) of 50 or more, or a copolymer rubber composition for refrigerators, which contains a silane-based modifier-filler, or the like have been so far proposed.

Patent Literature 2 : JP-A-2002-212362
Patent Literature 3 : JP-A-2002-349713

Evaluation of blister resistance of these ethylene-propylene-based copolymer rubber materials has been so far made only on single chlorofluorocarbon gas such as R134a. However, in air conditioners, refrigerators, etc. now in practical service, the sealing materials are exposed to a mixed state of chlorofluorocarbon gas with refrigerator oil, built-in oil, etc., and blisters are easy to generate in such a mixed state of chlorofluorocarbon gas with refrigerator oil, etc. and thus the proposed materials have no practically satisfactory blister resistance.
However, the afore-mentioned Patent Literature 2 proposes to use an ethylene-propylene-based copolymer rubber having a Mooney viscosity $ML_{1+4}$ (100°C) of about 50 or more so as to improve, even if small, the swelling caused by a lubricating oil (mineral oil), but such a rubber material having a high Mooney viscosity results in poor processability and moldability, and thus is not always preferable for molding sealing materials.
Various studies of refrigerants as a substitute for chlorofluorocarbon R134a have been so far made, but are still many years away from commercialization. So development and research are now concentrated on reduction by about 50% in permeation leakage amount of chlorofluorocarbon R134a from the air conditioners. Compressors in automobile air conditioners use lip seals as a shaft sealing device. Investigation made by one air conditioner manufacture, reports that such leakage of R134a refrigerant from the lip seal amounts to about 50% of the total leakage from the compressor. It was also found that most of such leakage was due to a permeation leakage through the rubber lips of lip seals in service.

Non-Patent Literature 2 : Kobe Symposium held by Japan Society of Refrigeration Industry on November 25, 2004, "HFC 134a : Study of refrigerant leakage from car air conditioner compressors"

Hydrogenated NBR is used as a rubber lip material for compressor lip seals now in the general use. Hydrogenated NBR has been used over about past 20 years as a material having distinguished heat resistance, oil resistance and strength, and still can work as a functionally satisfactory material, so long as the refrigerant leakage amount can be within the so far set allowable range, but materials with much less permeation leakage amount of chlorofluorocarbon R134a refrigerant are now in keen demand.

DISCLOSURE OF THE INVENTION

PROBLEM TO BE SOLVED BY THE INVENTION

An object of the present invention is to provide an EPDM composition having a distinguished blister resistance in a mixed state of a chlorofluorocarbon gas with a refrigerator oil in problem in the practical service and also a distinguished moldability, as a rubber material for molding sealing materials for chlorofluorocarbon refrigerants including R134a, and also to provide an EPDM composition capable of vulcanization-molding EPDM sealing materials by vulcanization-molding with much less permeation leakage amount of chlorofluorocarbon refrigerant than that of hydrogenated NBR so far used as a molding material for sealing materials for use as shaft sealing devices in compressors of automobile air conditioners.

MEANS FOR SOLVING THE PROBLEM

The object of the present invention can be attained by an EPDM composition, which comprises 100 parts by weight of EPDM having an ethylene content of 50-58% by weight, and a Mooney viscosity $ML_{1+4}$ (100°C) of 10-48, and 0.2-4.0 parts by weight of an organic peroxide as a cross-linking agent. Sealing materials produced by vulcanization-molding the EPDM composition have a TR-10 value (according to ASTM D-1329) of -25°C or less, and preferably a JIS A hardness (according to JIS K6253, corresponding to ISO 7619 ; determined to a rubber sheet, 2mm thick, by a type A Duro meter) of 60-90.

EFFECTS OF THE INVENTION

Sealing materials produced by vulcanization-molding the present EPDM composition have a distinguished blister resistance in the mixed state of chlorofluorocarbon gas with refrigerator oil under the nearly actual service conditions and also have a distinguished gas impermeability, and thus can be suitable for use as sealing materials for chlorofluorocarbon gases used in air conditioners, refrigerators, ice boxes, etc., for example, O rings, gaskets, packings, oil seals, etc. Furthermore, the present EPDM composition also has a distinguished moldability.
More specifically, when sealing materials produced from the present EPDM composition, for example, lip seals for oil seals, are used in shaft sealing lip seal for a refrigerant, particularly chlorofluorocarbon R134a and refrigerator oil, rubber lips with much less permeation leakage amount of chlorofluorocarbon R134a as a refrigerant can be provided. Generally, a permeation rate (Q/t) of a gas can be given by the following equation :

$$Q/t = P \cdot A \cdot \triangle p/L$$

, where P : gas permeability coefficient
A: gas permeable cross-section
$\triangle$p : difference in pressure
L : gas permeation path length.
As to rubber materials, the gas permeability coefficient P is predominant. The gas permeability coefficient P can be given by the following equation :

$$P = D \cdot S$$

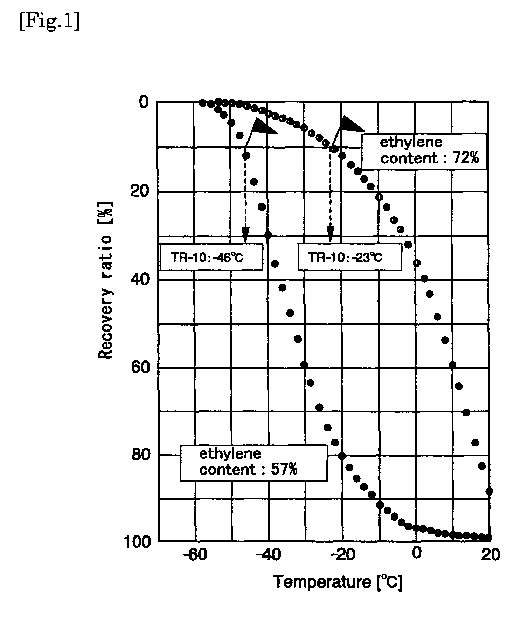

where D : diffusion coefficient
S : solubility coefficient
To lower the gas permeability coefficient P, it is necessary to use materials with smaller D and S values in the foregoing equation. The diffusion coefficient D shows how much refrigerant gas can diffuse into rubber, and can take part in migration towards the low-pressure side, and the solubility coefficient S shows how much refrigerant gas can dissolve into rubber. As a result of evaluation from such a viewpoint, it was found that EPDM materials having specific ethylene contents had a smaller value of solubility coefficient S in the presence of both refrigerant and oil than those of other available candidate materials.
Furthermore, it is necessary to take into account the service environmental temperature, particularly cold resistance, of lip seals in compressors of automobile air conditioners, using the EPDM material. Generally, an indicator of cold resistance is a TR-test (according to ASTM D-1329), where evaluation is made by a TR-10 value showing 10% recovery ratio in a TR-test. In the case of compressors using EPDM material, -25°C is the necessary lowest temperature. When the necessary lowest temperature is taken into account, a TR-10 value will be -23°C at an ethylene content of 72wt.% in the EPDM material (see Fig. 1 diagram), and thus not more than 58wt.%, at which the TR-10 value will be -46°C or less, will be desirable, whereas an ethylene content of less than 50wt.% will be undesirable from the viewpoint of gas shielding.

BRIEF DESCRIPTION OF THE DRAWING

[Fig. 1] A diagram showing TR-Tests for determining recovery ratio at various temperatures of vulcanization-molding products obtained from compositions containing EPDM, which has an ethylene content of 57wt.% and 72wt.%

BEST MODES FOR CARRYING OUT THE INVENTION

EPDM having an ethylene content of 50-58wt.%, and a Mooney viscosity $ML_{1+4}$ (100°C) of 10-48, preferably 30-45, can be used in the present invention. In the case of an EPDM composition having an ethylene content of less than 50wt.%., the tensile stress and strength will be lowered, resulting in durability troubles as a chlorofluorocarbon gas sealing material, whereas in the case of an EPDM having a higher ethylene content than 58wt.%, the low-temperature characteristics and compression set characteristics will be lowered, rendering the sealing material inappropriate. In the case of an EPDM having a Mooney viscosity of less than 10, dispersion of a reinforcing agent or a filler in the rubber by a tightly closed type kneader will be difficult to conduct, resulting in failure to obtain a satisfactory mechanical strength, whereas in the case of an EPDM having a higher Mooney viscosity than 48, the kneadability and moldability will be lowered, and thus will be process-wise unpreferable.

Diene component in EPDM includes, for example, dicyclopentadiene, ethylidene norbornene, vinylidene norbornene, etc. Actually, commercially available products such as Mitsui Chemical EPT series, JSR EP series, etc. can be used, among which those on some grades can be directly used as such.

Organic peroxide for use as an EPDM cross-linking agent includes, for example, t-butyl peroxide, dicumyl peroxide, t-butyl cumyl peroxide, 1,1-di(t-butylperoxy)-3,3,5-trimethylcyclohexane, 2,5-dimethyl-2,5-di(t-butylperoxy) hexane, 2,5-dimethyl-2,5-di(t-butylperoxy)hexine-3, 1,3-di(t-butylperoxyisopropyl)benzene, 2,5-dimethyl-2,5-di(benzoylperoxy)hexane, t-butylperoxybenzoate, t-butylperoxyisopropyl carbonate, n-butyl-4,4-di(t-butylperoxy)valerate, etc., and can be used in a proportion of 0.2-4.0 parts by weight, preferably about 1 to about 3 parts by weight, on the basis of 100 parts by weight of EPDM. When the organic peroxide is used in a proportion of less than 0.2 parts by weight, no sufficient cross-linking reaction will take place, whereas in a proportion of more than 4.0 parts by weight the blister resistance, which is the important target aimed at in the present invention, will be deteriorated.

The EPDM composition containing an organic peroxide as a cross-linking agent can further contain a filler, which includes, for example, carbon black, white carbon, aluminum silicate, a flat filler (e. g. talc, graphite, and mica), etc. Addition of such a filler can enhance the gas shieldability, but too much addition of the filler over the necessary proportion will lower the compression strength and resistance for loss of resilience of cross-linked EPDM, or may induce abrasion of a compressor shaft due to an increase in the hardness. Proportion of the filler is so adjusted that the JIS A hardness of EPDM-made lips can fall within a range of 60-90, preferably 70-85, whereby occurrences of such inconveniences can be prevented.

Carbon black having an average particle size (according to ASTM D1765-94a) of about 20 to about 600nm, preferably about 30 to about 100nm, can be used in a proportion of about 20 to about 120 parts by weight, preferably about 30 to about 100 parts by weight, on the basis of 100 parts by weight of EPDM. When the average particle size is less than about 20nm, the dispersability will be lowered, whereas above about 600nm, no satisfactory mechanical strength can be obtained any more. When the proportion is less than about 20 parts by weight, no satisfactory mechanical strength can be obtained any more, and the blister resistance will be lowered, whereas above about 120 parts by weight the rubber hardness will be too high, lowering the function as sealing material.

White carbon for use herein includes dry process silica, wet process silica, etc. having a specific surface area (by a nitrogen adsorption process) of about 30 to about 250$m^2$/g, preferably about 50 to about 150$m^2$/g, and an average particle size of about 30 to about 120nm, preferably about 40 to about 90nm, can be used in a proportion of about 20 to about 120 parts by weight, preferably about 30 to about 80 parts by weight, on the basis of 100 parts by weight of EPDM. When the specific surface area is less than about 30$m^2$/g, no satisfactory mechanical strength can be obtained any more, whereas above 250$m^2$/g the dispersability will be lowered. A range for admixing proportion can be selected on the same reasons as those for carbon black.

When white carbon is used as a filler, it is preferable to use a silane coupling agent at the same time. The silane coupling agent includes, for example, vinyltrimethoxysilane, $\gamma$- glycidoxypropyltrimethoxysilane, $\gamma$-methacryloxy-propyltrimethoxysilane, $\gamma$-aminopropyltrimethoxysilane, $\gamma$-mercaptopropyltrimethoxysilane, etc., and can be used in a proportion of about 0.5 to about 3 parts by weight, on the basis of 100 parts by weight of EPDM, together with white carbon, or a combination of white carbon and carbon black. When the proportion of the silane coupling agent is less than about 0.5 parts by weight, adherence of EPDM to white carbon will be insufficient, causing blister generation.

Aluminum silicate having an average particle size (according to ASTM D1765-94a) of about 0.1 to about 5μm, preferably 0.5-3μm, can be used in a proportion of about 20 to about 150 parts by weight, preferably about 30 to about 130 parts by weight, on the basis of 100 parts by weight of EPDM. Flat fillers such as talc, graphite, mica, etc. having an average particle size (according to ASTM D1765-94a) of about 3 to about 20 μm, preferably about 5 to about 15 μm, can be used in a proportion of about 5 to about 60 parts by weight, preferably about 10 to about 40 parts by weight, on the basis of 100 parts by weight of EPDM. When the average particle size of these fillers is less than the afore-mentioned lower limit values, an effect on the increase in the gas shieldability will be less, whereas above the afore-mentioned upper limit values, the rubber strength and blister resistance have a decreasing tendency. Ranges for admixing proportions are selected on the same reasons for those of carbon black. In these cases, it is also preferable to use a silane coupling agent in a similar proportion at the same time.

White carbon, aluminum silicate or a flat filler can be used together with carbon black, where they can be used in a proportion of about 20 to about 150 parts by weight, preferably about 40 to about 120 parts by weight as total of both, on the basis of 100 parts by weight of EPDM.

The EPDM composition can be further added appropriately, if necessary, with ordinary compounding agents, for example, a reinforcing agent such as activated calcium carbonate, etc., a filler such as calcium silicate, etc., a processing aid such as stearic acid, palmitic acid, paraffin wax, etc., an acid acceptor such as zinc oxide, magnesium oxide, hydrotalcite, etc., an antioxidant, a plasticizer, etc.

The composition can be prepared by kneading through a kneader such as intermix, kneader, Banbury mixer, etc., or open rolls, etc., and the resulting kneading product can be vulcanization-molded generally by heating at about 150° to about 200°C for about 2 to about 60 minutes through an injection molding machine, a compression molding machine, a vulcanization press, etc. and can be further subjected, if necessary, to oven vulcanization (secondary vulcanization) at about 100° to about 200°C for about 1 to about 24 hours.

The resulting vulcanization product can be shaped as a sealing materials such as O rings, gaskets, packings, oil seals, etc., particularly as sealing materials for chlorofluorocarbon gases for use in a mixed state of chlorofluorocarbon gases such as R134a, R152a, R125a, R32, R407C, R410A, etc. with a refrigerator oil such as polyalkylene glycol, polyether oil, polyester oil, etc.

EXAMPLES

The present invention will be described in detail below, referring to Examples.

EXAMPLE 1

|  | Parts by weight |
|---|---|
| EPDM (EPT4045, Mitsui Chemical product; ethylene content: 54wt.%, Mooney viscosity $ML_{1+4}$ (100°C) : 45) | 100 |
| SRF carbon black (average particle size : 70nm) | 70 |
| Zinc oxide | 5 |
| Antioxidant (Nocrack CD, Ouchi-Shinko Chemical product) | 1 |
| Dicumyl peroxide | 2.5 |

The foregoing components were kneaded through a kneader and open rolls, and the resulting kneading product was subjected to press vulcanization at 170°C for 15 minutes by a vulcanization press and then to secondary vulcanization at 150°C for 5 hours in a heated oven to produce vulcanization sheets (150mm × 150mm × 2mm) and O rings of P-24 size.

EXAMPLE 2

In Example 1, the amount of SRF carbon black was changed to 25 parts by weight, and 30 parts by weight of white carbon (specific surface area : 90m²/g) and 2 parts by weight of vinyltrimethoxysilane were further added thereto.

EXAMPLE 3

In Example 1, the amount of SRF carbon black was changed to 50 parts by weight, and 30 parts by weight of aluminum silicate (average particle size : 1.4μm) and 2 parts by weight of vinyltrimethoxysilane were further added thereto.

EXAMPLE 4

In Example 1, the amount of SRF carbon black was changed to 50 parts by weight, and 30 parts by weight of flat filler talc (average particle size : 6μ m) and 2 parts by weight of vinyltrimethoxysilane were further added thereto.

COMPARATIVE EXAMPLE 1

|  | Parts by weight |
| --- | --- |
| Hydrogenated NBR (Zetpol 2020, a Nippon Zeon Product) | 100 |
| SRF carbon black (average particle size : 70nm) | 80 |
| Zinc oxide | 5 |
| Antioxidant (Nocrack CD) | 1 |
| Dicumyl peroxide | 4 |

The foregoing components were kneaded, vulcanized and molded in the same manner as in Example 1.

COMPARATIVE EXAMPLE 2

In Example 1, the amount of SRF carbon black was changed to 60 parts by weight, and the amount of dicumyl peroxide was changed to 5 parts by weight.

Vulcanization sheets obtained in the foregoing Examples and Comparative Examples were subjected to measurement and evaluation of the following items, and O rings of P-24 size were subjected to measurement of compression set (according to JIS K6262, corresponding to ISO 815 ; 150°C, 70 hours).

Normal state physical properties : according to JIS K6253 (corresponding to ISO 7619) and JIS K6251 (corresponding to ISO 37)

Low-temperature characteristics : TR-10 values were measured according to JIS K6261 (corresponding to ISO 2921)

Gas permeation test : Measurement was conducted at 70°C according to JIS K7126 (corresponding to ISO 2556)

Chlorofluorocarbon gas/refrigerator oil resistance test : vulcanization sheet test pieces, 50mm × 20mm × 2mm, were dipped into a mixed system of a liquid mixture in equal weights of R134a/polyalkylene glycol (PAG oil) or a liquid mixture in equal weights of R134a/ester-based oil at 40°C of 168 hours, and then heated by air at 150 °C for 30 minutes, then the appearance state (occurrence or not of foaming : blister generation) was visually inspected

Chlorofluorocarbon gas resistance : Vulcanization sheet test pieces, 50mm × 20mm × 2mm, were exposed to various chlorofluorocarbon gases at 25°C for 70 hours, and then heated by air at 150°C for 30 minutes, then the appearance state (occurrence or not of foaming : blister generation) was visually inspected

The results are shown in the following Table, from which it is apparent that vulcanization products of the present EPDM composition show distinguished blister resistance even in mixed systems of chlorofluorocarbon gas/refrigerator oil. When the organic peroxide is used in excess, on the other hand, blister generation, which has been out of question in a single chlorofluorocarbon gas, shows a problem in practical use.

Table

|  | Example No. | | | | Comp. Ex. No. | |
| --- | --- | --- | --- | --- | --- | --- |
| Determination & Evaluation Items | 1 | 2 | 3 | 4 | 1 | 2 |
| [Normal state physical properties] | | | | | | |
| Hardness (Durometer A) | 75 | 75 | 75 | 75 | 77 | 75 |
| Tensile strength (MPa) | 22.0 | 18.2 | 20.8 | 19.0 | 21.5 | 22.3 |
| Elongation (%) | 250 | 350 | 400 | 210 | 260 | 200 |
| [Low-temperature Characteristics] | | | | | | |
| TR-10 (°C) | -46 | -45 | -45 | -44 | -20 | -46 |

(continued)

| | | | | | | |
|---|---|---|---|---|---|---|
| [Compression set] | | | | | | |
| 150°C for 70 hrs (%) | 24 | 20 | 22 | 28 | 45 | 21 |
| [Gas permeation test] | | | | | | |
| R134a permeability coefficient (mg · mm/cm$^2$ · 24hr) | 24 | 23 | 24 | 18 | 41 | 24 |
| [Chlorofluorocarbon gas/refrigerator oil resistance : Occurrence or not of foaming | | | | | | |
| R134a/PAG oil | none | none | none | none | none | found |
| R134a/ester-based oil | none | none | none | none | none | found |
| [Chlorofluorocabon gas resistance ; Occurrence or not of foaming] | | | | | | |
| R152a | none | none | none | none | none | none |
| R134a | none | none | none | none | none | none |
| R125a | none | none | none | none | none | none |
| R32 | none | none | none | none | none | none |
| R407C | none | none | none | none | none | none |
| R410A | none | none | none | none | none | none |

## Claims

1. An EPDM composition, which comprises 100 parts by weight of EPDM having an ethylene content of 50-58wt.%, and a Mooney viscosity $ML_{1+4}$ (100°C) of 10-48, and 0.2-4.0 parts by weight of an organic peroxide as a cross-linking agent.

2. An EPDM composition according to Claim 1, wherein a filler is further contained.

3. An EPDM composition according to Claim 2, wherein 20-120 parts by weight of carbon black having an average particle size (according to ASTM D1765-94a) of 20-600nm is contained as the filler.

4. An EPDM composition according to Claim 2, wherein 20-120 parts by weight of white carbon having a specific surface area (according to a nitrogen adsorption process) of 30-250m$^2$/g is contained as the filler.

5. An EPDM composition according to Claim 2, wherein 20-150 parts by weight of aluminum silicate having an average particle size (according to ASTM D1765-94a) of 0.1-5 $\mu$ m is contained as the filler.

6. An EPDM composition according to Claim 2, wherein 5-60 parts by weight of a flat filler having an average particle size (according to ASTM D1765-94a) of 3-20 $\mu$ m is contained as the filler.

7. An EPDM composition according to Claim 6, wherein the flat filler is talc, graphite, or mica.

8. An EPDM composition according to Claim 2, wherein 20-150 parts by weight in total of (A) carbon black, and (B) white carbon, aluminum silicate, or a flat filler is contained as the filler.

9. An EPDM composition according to Claim 2, wherein the filler is white carbon, a combination of white carbon with carbon black, aluminum silicate, or a flat filler, and 0.5-3 parts by weight of a silane coupling agent is further contained together with the filler.

10. An EPDM composition according to Claim 1, for use as a molding material for sealing materials.

11. An EPDM composition according to Claim 2, for use as a molding material for sealing materials.

12. Sealing materials vulcanization-molded from an EPDM composition according to Claim 10.

13. Sealing materials vulcanization-molded from an EPDM composition according to Claim 11.

**14.** Sealing materials according to Claim 12, wherein the vulcanization-molding products have a TR-10 value (according to ASTM D-1329) of -25°C or less.

**15.** Sealing materials according to Claim 13, wherein the vulcanization-molding products have a TR-10 value (according to ASTM D-1329) of -25°C or less.

**16.** Sealing materials according to Claim 12, wherein the vulcanization-molding products have a JIS A hardness of 60-90.

**17.** Sealing materials according to Claim 13, wherein the vulcanization-molding products have a JIS A hardness of 60-90.

**18.** Sealing materials according to Claim 12, for use in service in the presence of a mixture of chlorofluorocarbon gas and refrigerator oil.

**19.** Sealing materials according to Claim 13, for use in service in the presence of a mixture of chlorofluorocarbon gas and refrigerator oil.

**20.** Sealing materials according to Claim 12, for use in shaft sealing of air conditioner compressors using a chlorofluorocarbon gas as a refrigerant.

**21.** Sealing materials according to Claim 13, for use in shaft sealing of air conditioner compressors using a chlorofluorocarbon gas as a refrigerant.

**Amended claims under Art. 19.1 PCT**

**1.** An EPDM composition for use as a molding material for chlorofluorocarbon gas and refrigerator oil sealing materials, which comprises 100 parts by weight of EPDM having an ethylene content of 50-58wt.%, and a Mooney viscosity $ML_{1+4}$ (100°C) of 10-48, and 0.2-4.0 parts by weight of an organic peroxide as a cross-linking agent.

**2.** An EPDM composition according to Claim 1, wherein a filler is further contained.

**3.** An EPDM composition according to Claim 2, wherein 20-120 parts by weight of carbon black having an average particle size (according to ASTM D1765-94a) of 20-600nm is contained as the filler.

**4.** An EPDM composition according to Claim 2, wherein 20-120 parts by weight of white carbon having a specific surface area (according to a nitrogen adsorption process) of $30\text{-}250m^2/g$ is contained as the filler.

**5.** An EPDM composition according to Claim 2, wherein 20-150 parts by weight of aluminum silicate having an average particle size (according to ASTM D1765-94a) of $0.1\text{-}5\mu m$ is contained as the filler.

**6.** An EPDM composition according to Claim 2, wherein 5-60 parts by weight of a flat filler having an average particle size (according to ASTM D1765-94a) of 3-20 $\mu$ m is contained as the filler.

**7.** An EPDM composition according to Claim 6, wherein the flat filler is talc, graphite, or mica.

**8.** An EPDM composition according to Claim 2, wherein 20-150 parts by weight in total of (A) carbon black, and (B) white carbon, aluminum silicate, or a flat filler is contained as the filler.

**9.** An EPDM composition according to Claim 2, wherein the filler is white carbon, a combination of white carbon with carbon black, aluminum silicate, or a flat filler, and 0.5-3 parts by weight of a silane coupling agent is further contained together with the filler.

**10.** Sealing materials vulcanization-molded from an EPDM composition according to Claim 1.

**11.** Sealing materials vulcanization-molded from an EPDM composition according to Claim 2.

**12.** Sealing materials according to Claim 10, wherein the vulcanization-molding products have a TR-10 value (according to ASTM D-1329) of -25°C or less.

**13.** Sealing materials according to Claim 11, wherein the vulcanization-molding products have a TR-10 value (according to ASTM D-1329) of -25°C or less

**14.** Sealing materials according to Claim 10, wherein the vulcanization-molding products have a JIS A hardness of 60-90.

**15.** Sealing materials according to Claim 11, wherein the vulcanization-molding products have a JIS A hardness of 60-90.

**16.** Sealing materials according to Claim 10, for use in service in the presence of a mixture of chlorofluorocarbon gas and refrigerator oil.

**17.** Sealing materials according to Claim 11, for use in service in the presence of a mixture of chlorofluorocarbon gas and refrigerator oil.

**18.** Sealing materials according to Claim 16, wherein the service in the presence of a mixture of chlorofluorocarbon gas and refrigerator oil is shaft sealing of air conditioner compressors.

**19.** Sealing materials according to Claim 17, wherein the service in the presence of a mixture of chlorofluorocarbon gas and refrigerator oil is shaft sealing of air conditioner compressors.

[Fig.1]

| **INTERNATIONAL SEARCH REPORT** | International application No. |
|---|---|
| | PCT/JP2006/312375 |

A. CLASSIFICATION OF SUBJECT MATTER
*C08L23/16*(2006.01)i, *C08K3/04*(2006.01)i, *C08K3/34*(2006.01)i, *C08K5/14*
(2006.01)i, *C08K7/00*(2006.01)i, *C09K3/10*(2006.01)i, *F16J15/10*(2006.01)i

According to International Patent Classification (IPC) or to both national classification and IPC

B. FIELDS SEARCHED

Minimum documentation searched (classification system followed by classification symbols)
C08L1/00-101/16, C08K3/00-13/08, C09K3/10, F16J15/10

Documentation searched other than minimum documentation to the extent that such documents are included in the fields searched
Jitsuyo Shinan Koho          1922-1996     Jitsuyo Shinan Toroku Koho   1996-2006
Kokai Jitsuyo Shinan Koho   1971-2006     Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 10-265626 A  (Mitsui Chemicals, Inc.),<br>06 October, 1998 (06.10.98),<br>Full description | 1,2,3,8-17<br>18-21 |
| X<br>Y | JP 2002-265714 A  (The Yokohama Rubber<br>Co., Ltd.),<br>18 September, 2002 (18.09.02),<br>Full description<br>(Family: none) | 1,2<br>4,8,9,18-21 |
| Y | JP 2005-112918 A  (Tokuyama Corp.),<br>28 April, 2005 (28.04.05),<br>Full description<br>(Family: none) | 4,8,9,18-21 |

| ☒ | Further documents are listed in the continuation of Box C. | ☒ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 September, 2006 (26.09.06) | 03 October, 2006 (03.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2006/312375 |

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2003-73514 A (Tokai Rubber Industries, Ltd.),<br>12 March, 2003 (12.03.03),<br>Full description | 1,2,5-9<br>18-21 |
| Y | JP 6-345915 A (The Yokohama Rubber Co., Ltd.),<br>20 December, 1994 (20.12.94),<br>Full description<br>(Family: none) | 18-21 |
| Y | JP 2002-349713 A (Mitsubishi Cable Industries, Ltd.),<br>04 December, 2002 (04.12.02),<br>Full description<br>(Family: none) | 18-21 |
| A | JP 2002-194156 A (Mitsubishi Cable Industries, Ltd.),<br>10 July, 2002 (10.07.02),<br>Full description<br>(Family: none) | 1-21 |
| A | JP 8-208913 A (NOK Kabushiki Kaisha),<br>13 August, 1996 (13.08.96),<br>Full description<br>(Family: none) | 1-21 |
| A | JP 9-77911 A (NOK Kabushiki Kaisha),<br>25 March, 1997 (25.03.97),<br>Full description<br>(Family: none) | 1-21 |
| A | JP 2003-253067 A (Mitsubishi Cable Industries, Ltd.),<br>10 September, 2003 (10.09.03),<br>Full description<br>(Family: none) | 1-21 |

Form PCT/ISA/210 (continuation of second sheet) (April 2005)

**INTERNATIONAL SEARCH REPORT**
Information on patent family members

| | | | |
|---|---|---|---|
| International application No. | | | |
| | | PCT/JP2006/312375 | |

| | | | |
|---|---|---|---|
| JP 10-265626 A | 1998.10.06 | JP 3750962 B2 | 2006.03.01 |
| JP 2003-73514 A | 2005.04.28 | EP 1291566 A2 | 2003.03.12 |
| | | US 2003/50405 A1 | 2003.03.13 |
| | | CN 1403499 A | 2003.03.19 |
| | | US 6737480 B2 | 2004.05.18 |
| | | EP 1291566 B1 | 2005.01.26 |
| JP 9-77911 A | 1997.03.25 | JP 3344187 B2 | 2002.11.11 |

Form PCT/ISA/210 (patent family annex) (April 2005)

**EP 1 894 969 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7118447 A
- JP 2002212362 A
- JP 2002349713 A

**Non-patent literature cited in the description**

- *Bulletin of Japan Rubber Society,* 1991, vol. 64, 161
- HFC 134a : Study of refrigerant leakage from car air conditioner compressors. *Kobe Symposium held by Japan Society of Refrigeration Industry,* 25 November 2004